# EUROPÄISCHE PATENTANMELDUNG

(11) **EP 1 707 245 A1**
(43) Veröffentlichungstag der Anmeldung: **04.10.2006**
(21) Anmeldenummer: 04816709.2
(22) Anmeldetag: 29.12.2004
(51) Int. Cl.: A63B 69/18

(54) **SLALOM-LEHRMETHODE UND ÜBUNGSMODUS SOWIE SLALOM-SIMULATOR**

(30) Priorität: 30.12.2003 RU 2003137747
(71) Anmelder: Baydzhanova, Ekaterina Vladimirovna, Kaliningrad 236006 (RU); Baydzhanov, Vladimir Valerievich, Kaliningrad 236006 (RU)
(72) Erfinder: BAYDZHANOV, Vladimir Valerievich, Kaliningrad, 236006 (RU)
(86) Internationale Anmeldenummer: PCT/RU2004/000529
(87) Internationale Veröffentlichungsnummer: WO 2005/063342

(57) **Zusammenfassung**

Die Erfindung gehört sowohl zum Sportbereich, insbesondere zu den Schulungsmethoden für Slalom und zu den Vorrichtungen für die Übungen und den Erwerb von Fertigkeiten des Alpin-, Wasserschi- bzw. Snowboard-Slalomlauf als auch zu den Unterhaltungsvorrichtungen.

Der Slalomimitator enthält: eine Basis (1), ein auf der Basis aufgestelltes Tragelement (2) mit der Möglichkeit der Umsetzung nach links - nach rechts, eine auf ihm aufgestellte Plattform (4) mit der Möglichkeit der gleichzeitigen mit ihm Rotation periodisch im bzw. entgegen dem Uhrzeigersinn mit der Stützfläche für die Füße des Slalomläufers, für die Schier bzw. für ein Snowboard sowie eine Kurbelschleife für die Synchronisation und das Umsteuern der genannten Umsetzung des Tragelements (2) und Rotation der Plattform (4). Die Kulisse ist auf der Basis (1) befestigt und ist mit der geschlossenen Laufbahn der Bewegung des Gleitsteines ausgeführt, der in der Kulisse so aufgestellt ist, dass die Möglichkeit seiner Bewegung in ihr in eine Richtung und die Möglichkeit der Gewährleistung der Gesetzmäßigkeit von der Umsetzung der Plattform (4) hinsichtlich der Basis (1) gemäß dem Slalombewegungsgrundsatz in Bezug auf die Translationsbewegung bei der Umsetzung von den Füßen des Slalomläufers, von den Schiern bzw. von einem Snowboard nach links - nach rechts sowie die Möglichkeit der Änderung deren Winkellage bei deren genannten Rotation und/oder Umsetzung nach vorne besteht.

## Beschreibung

Die Erfindung gehört sowohl zum Sportbereich, insbesondere zu den Schulungsmethoden für Slalom und zu den Vorrichtungen für die Übungen und den Erwerb von Fertigkeiten des Alpin-, Wasserschi- bzw. Snowboard-Slalomlauf als auch zu den Unterhaltungsvorrichtungen.

Bekannt ist sowohl eine Reihe von Schulungs- und Trainingsmethoden der Alpinschifahrer, Snowboarder und Wasserschiläufer außerhalb der echten Pisten als auch eine Reihe von Vorrichtungen, mit deren Hilfe diese Methoden realisiert worden sind.

Solchermaßen ist die Schulungs- und Trainingsmethode des Slalomläufers bekannt, die durch eine Vorrichtung gemäß dem Patent US 3524641, A 63 B 69/18, 1970 realisiert worden ist und die darin besteht, dass bei der Imitation der Bewegungen in Slalomkurven die Füße des Slalomläufers, der auf der Stützfläche einer Plattform steht, die Umsetzung umschichtig nach links - nach rechts durchführen; dabei hält der Slalomläufer das Gleichgewicht mit Hilfe von Stöcken, die sich auf einen Boden bzw. auf eine Basis stützen.

Ein Nachteil der bekannten Methode ist eine Diskrepanz zwischen den Fuß- und Körperbewegungen des Slalomläufers und den simulierten Bedingungen in Bezug auf die Richtungsänderung der Schifahrt, die durch die technische Lösung der Vorrichtung, die nur die fortschreitende Bewegung des Tragelements mit der Plattform ermöglicht, verursacht wird.

Bekannt sind auch Schulungs- und Trainingsmethoden der Slalomläufer, die durch Vorrichtungen realisiert werden, in denen sich eine drehbare Plattform mit einer Stützfläche für die Füße, die Schier bzw. für ein Snowboard flach parallel nach links - nach rechts geradlinig (siehe Patent US 5078389, A 63 B 69/18, 1992) bzw. auf dem Bügel auf dem Tragelement (s. US 3511499, A 63 B 69/18, 1965; FR 1486082, A 63 B 69/18, 1967) bzw. auf dem Bügel auf dem Tragelement, das in Form eines Stangen-Balkens ausgeführt ist (NL 8702665, A 63 B 69/18, 1989; US 4846463, A 63 B 69/18, 1989), bewegt.

Bei diesen Schulungs- und Trainingsmethoden haben die Füße auf den Schiern die Möglichkeit, jede Lage einzunehmen, indem die Achsen der Schier in jede Richtung gerichtet werden können; außerdem gibt es die Möglichkeit, die Änderung der Bewegungsrichtung zu imitieren.

Jedoch sind diese Methoden wenig effektiv für die Schüler, die ihre Lauftechnik korrigieren wollen und noch keine richtigen Fertigkeiten haben sowie für diejenigen, die ihre Füße (die Längsachsen der Schier) in einer bestimmten Abhängigkeit von der Beinstellung auf der Laufstrecke nach rechts - nach links nicht auf eine richtige Weise unterbringen können. Wegen der fehlenden Abhängigkeit der Wendung der Füßen in der Gleitebene von dem Standort auf der Laufstrecke der Bewegung nach links - nach rechts entspricht bei solchen Methoden die Einwirkung auf den Slalomläufer keiner realen Situation, außerdem fehlt die Möglichkeit, die Ügungen mehrmals für die Ausarbeitung der richtgen, notwendigen Fertigkeiten in der erforderlichen Genauigkeit zu wiederholen.

Die der zu patentierenden Methode und dem zu patentierenden Slalomimitator ähnlichsten Methoden sind dem technischen Wesen nach sowohl eine Schulungs- und Trainingsmethode der Slalomläufer, die eine Umsetzung von den Füßen des Slalomläufers hinsichtlich der Basis periodisch nach links - nach rechts und ihre gleichzeitige Rotation sowie das Umsteuern der Umsetzung nach links - nach rechts und die Rotation der Füße einbezieht, als auch ein Slalomimitator, der eine Basis, ein auf dieser aufgestelltes umstellbares Tragelement, eine auf ihm aufgestellte rotationsfähige Plattform mit der Stützfläche für die Füße, Schier oder ein Snowboard und einen Kurbelschleifentrieb der Synchronisation und des Umsteuerns der Umsetzung des Tragelements sowie der Rotation der Plattform enthält (s. US 3704885, A 63 B 69/18, 1972).

Ein Fehler in der bekannten Methode und im Slalomimitator ist eine Diskrepanz zwischen der Winkelstellung der Füße bei ihrer Umsetzung nach rechts - nach links und ihrer realen Stellung bei der Slalomschifahrt, weil die Achsen der Füße (die Schiachsen) in den extremen Punkten der Plattformumsetzung nicht nach der Achse der Slalompiste gerichtet sind, wie es auf der echten Piste sein soll; außerdem befinden sich die Schiachsen in der Mittelstellung des Tragelements (zwischen den extremen Punkten der Umsetzung des Tragelements nach rechts - nach links) nicht abgewinkelt zur Trassenachse. Das Ergebnis ist, dass die Bedingungen, die dem Grundsatz der Bewegung eines Slalomläufers auf einer echten Slalompiste entsprechen, bei der Ausbildung und dem Training des Slalomläufers nicht erfüllt werden.

Die Aufgabe der zu patentierenden Methode für die Schulung und das Training des Slalomläufers bzw. des zu patentierenden Slalomimitators ist es, bei der Schulung und dem Training die Bedingungen zu erfüllen, die dem Grundsatz der Bewegung des Slalomläufers auf einer echten Slalompiste entsprechen.

Das technische Ergebnis ist die mehrfache Wiederholung der zyklischen Umsetzungen der Füße und des Körpers des Slalomläufers unter den durch den Slalomimitator imitierten Konditionen, die insgesamt maximal denen ähnlich sind, die unter realen Konditionen bei der Fahrt auf einer Slalompiste mit dem Erwerb aller entsprechenden Empfindungen auftreten.

Mittels der Schulungs- und Trainingsmethode des Slalomläufers, die die Umsetzung von den Füßen des Slalomläufers, von den Schiern bzw. von einem Snowboard hinsichtlich der Basis periodisch nach rechts - nach links und ihre gleichzeitige Rotation periodisch im bzw. entgegen dem Uhrzeigersinn sowie das Umsteuern der genannten Umsetzung und Rotation von den Füßen des Slalomläufers, von den Schiern bzw. von einem Snowboard einbezieht, genannte Umsetzung und Rotation von den Füßen des Slalomläufers, von den Schiern bzw. von einem Snowboard mit der Neigung der Beine des Slalomläufers hinsichtlich der Basis durchführt, und das Umsteuern der genannten Umsetzung und Rotation von den Füßen des Slalomläufers, von den Schiern bzw. von einem Snowboard nacheinander mit der Anfangsphasenverschiebung dieser Bewegungen durchführt; dabei entspricht die Gesetzmäßigkeit der genannten Umsetzung und Rotation von den Füßen des Slalomläufers, von den Schiern bzw. von einem Snowboard hinsichtlich der Basis für eine Periode den Slalombewegungsgrundsätzen in Bezug auf die Translationsbewegung bei der Umsetzung von den Füßen des Slalomläufers, von den Schiern bzw. von einem Snowboard nach links - nach rechts und in Bezug auf die Änderung ihrer Winkellage bei deren genannter Rotation.

Die genannte Aufgabe und das technische Ergebnis werden auch dadurch erreicht, dass man die genannte Rotation von den Füßen, von den Schiern bzw. von einem Snowboard hinsichtlich der Basis im Uhrzeigersinn bei der Umsetzung von den Füßen, von den Schiern oder von einem Snowboard hinsichtlich der Basis von der Mittelstellung nach links bis zum extremer Punkt und zurück nach rechts bis zur Mittelstellung durchführt, und ferner entgegen dem Uhrzeigersinn bei der Umsetzung von den Füßen, von den Schiern bzw. von einem Snowboard hinsichtlich der Basis von der Mittelstellung nach rechts bis zum extremen Punkt und zurück nach links bis zur Mittelstellung durchführt; dabei erreicht der Winkel zwischen der Längsachse von den Füßen, von den Schiern bzw. von einem Snowboard und der Spiegelebene der Lage der extremen Punkte ihrer Umsetzung seine maximalen Werte bei der Fußstellung in der Mittelstellung zwischen den extremen Punkten und seinen Null-Wert bzw. seine minimalen Werte in den extremen Punkten.

Und auch dadurch, dass die genannte Umsetzung von den Füßen, von den Schiern bzw. von einem Snowboard nach links - nach rechts und ihre Rotation periodisch im bzw. entgegen dem Uhrzeigersinn frei durch die Anstrengung des Slalomläufers oder zwangsweise durch einen Umsetzungsantrieb erfolgt.

Und auch dadurch, dass man bei der genannten Umsetzung von den Füßen, von den Schiern bzw. von einem Snowboard nach links - nach rechts eine Gegenwirkung der genannten Umsetzung durchführt.

Und auch dadurch, dass man die genannte Umsetzung von den Füßen, von den Schiern bzw. von einem Snowboard nach links-nach rechts und ihre Rotation periodisch im bzw. entgegen dem Uhrzeigersinn mit dem Kanteneinsatz und/oder der Disfooting durchführt.

Und auch dadurch, dass man die genannte Rotation von den Füßen, von den Schiern bzw. von einem Snowboard periodisch im bzw. entgegen dem Uhrzeigersinn mit der kurzen Bewegung nach vorne in den Endabschnitten ihrer genannten Umsetzung nach links - nach rechts durchführt.

Und auch dadurch, dass man die genannte Rotation von den Füßen, von den Schiern bzw. von einem Snowboard periodisch im bzw. entgegen dem Uhrzeigersinn in der Fläche durchführt, die zur horizontalen Fläche nach vorne in Bezug auf den Slalomläufer geneigt ist.

Mittels der Schulungs- und Trainingsmethode des Slalomläufers, die die Umsetzung von den Füßen des Slalomläufers, von den Schiern bzw. von einem Snowboard hinsichtlich der Basis periodisch nach links - nach rechts und ihre gleichzeitige Rotation periodisch im bzw. entgegen dem Uhrzeigersinn sowie das Umsteuern der genannten Umsetzung und Rotation von den Füßen des Slalomläufers, von den Schiern bzw. von einem Snowboard umfasst, werden die genannte Aufgabe und das technische Ergebnis dadurch erreicht, dass die genannte Umsetzung und Rotation von den Füßen des Slalomläufers, von den Schiern bzw. von einem Snowboard mit der Neigung der Beine des Slalomläufers hinsichtlich der Basis erfolgen, während das Umsteuern der genannten Umsetzung und Rotation von den Füßen des Slalomläufers, von den Schiern bzw. von einem Snowboard nacheinander mit der Anfangsphasenverschiebung dieser Bewegungen erfolgt; dabei entspricht die Gesetzmäßigkeit der genannten Umsetzung und Rotation von den Füßen des Slalomläufers, von den Schiern bzw. von einem Snowboard hinsichtlich der Basis für eine Periode den Slalombewegungsgrundsätzen, einschließlich der Translationsbewegung von den Füßen, von den Schiern bzw. von einem Snowboard nach links - nach rechts sowie ihrer genannten gleichzeitigen Rotation und Bewegung nach vorne.

Mittels des Slalomimitators, der eine Basis, ein auf ihr aufgestelltes Tragelement, das sich nach links - nach rechts bewegen kann, eine auf diesem aufgestellte Plattform mit der Stützfläche für die Füße, für die Schier oder für ein Snowboard mit der Möglichkeit der gleichzeitigen mit ihm Rotation periodisch im bzw. entgegen dem Uhrzeigersinn sowie eine Kurbelschleife für die Synchronisation und das Umsteuern der genannten Umsetzung des Tragelements und der Plattformrotation enthält, werden die genannte Aufgabe und das technische Ergebnis dadurch erreicht, dass die Kulisse auf der Basis befestigt ist und mit einem Bewegungskreis eines Gleitsteins ausgeführt wird, der in der Kulisse so aufgestellt ist, dass eine Möglichkeit seiner Bewegung in der Kulisse in eine Richtung sowie eine Möglichkeit der Gewährleistung der Gesetzmäßigkeit der Plattformumsetzung hinsichtlich der Basis gemäß dem Slalombewegungsgrundsatz in Bezug auf die Translationsbewegung bei der Umsetzung von den Füßen des Slalomläufers, von den Schiern bzw. von einem Snowboard nach links ― nach rechts und der Änderung ihrer Winkellage bei ihrer genannten Rotation bestehen.

Und auch dadurch, dass die Kulisse eine Form hat, die, während der Gleitstein sich in der Kulisse bewegt, gewährleistet: die Plattformrotation hinsichtlich der Basis im Uhrzeigersinn bei der Umsetzung des Tragelements von der Mittelstellung nach links bis zum extremen Punkt und zurück nach rechts bis zur Mittelstellung und ferner entgegen dem Uhrzeigersinn bei der Umsetzung des Tragelements von der Mittelstellung nach rechts bis zum extremen Punkt und zurück nach links bis zur Mittelstellung sowie die Erreichung der maximalen Werte eines Winkels zwischen der Längsachse von den auf der Stützfläche aufgestellten Füßen, von den Schiern bzw. einem Snowboard und der Spiegetebene der Lage der extremen Punkte der Tragelementsumsetzung, indem sich die Plattform in der Mittelstellung zwischen den extremen Punkten befindet, sowie auch die Erreichung des Null-Werts bzw. der minimalen Werte dieses Winkels bei der Lage der Plattform in den extremen Punkten.

Und auch dadurch, dass auf der Stützfläche eine Markierung der Richtung der Längsachse von den Füßen des Slalomläufers, von den Schiern bzw. von einem Snowboard aufgetragen ist, die auf der erwähnten Stützfläche aufgestellt werden.

Und auch dadurch, dass er eine Vorrichtung aufweist, die eine Änderung der Bewegungsrichtung des Gleitsteines in der Kulisse und dementsprechend die Plattformrotation in den extremen Punkten des Umsteuerns der Tragelementsumsetzung ausschließt.

Und auch dadurch, dass er eine Vorrichtung für die Schaffung von einer Gegenwirkungsanstrengung in Bezug auf die Umsetzung des Tragelements von der Mittelstellung der Laufbahn in Richtung der extremen Punkte seiner Umsetzung aufweist.

Und auch dadurch, dass die Vorrichtung für die Schaffung der Gegenwirkungsanstrengung in Bezug auf die Umsetzung des Tragelements in der Form von wenigstens einem elastisch deformierenden Kraftzug ausgeführt ist, der mit seinem einen Ende mit dem Tragelement und mit seinem anderen Ende mit der Basis mit der Biegung wenigstens durch einen Block verknüpft ist, der auf der Basis in einem Punkt befestigt ist, der zwischen den Flächen liegt, die senkrecht zur Umsetzungsrichtung des Tragelements sind und die sich durch die extremen Punkte der Umsetzung des Tragelements ziehen.

Und auch dadurch, dass er eine Vorrichtung aufweist, die eine Änderung der Bewegungsrichtung des Gleitsteines in der Kulisse und dementsprechend die Plattformrotation in den extremen Punkten des Umsteuerns der Tragelementsumsetzung ausschließt und gleichzeitig die Schaffung von einer Gegenwirkungsanstrengung in Bezug auf die Umsetzung des Tragelements vom mittleren Teil der Laufbahn in Richtung der extremen Punkte seiner Umsetzung leistet.

Und auch dadurch, dass die Vorrichtung, die die Änderung der Bewegungsrichtung des Gleitsteines in der Kulisse und dementsprechend die Plattformrotation in den extremen Punkten des Umsteuerns der Tragelementsumsetzung ausschließt und die gleichzeitig die Gegenwirkungsanstrengung in Bezug auf die Umsetzung des Tragelements von der Mittelstellung der Laufbahn in Richtung der extremen Punkten seiner Umsetzung leistet, in der Form von wenigstens einem elastisch deformierenden Kraftzug ausgeführt ist, der mit seinem einen Ende mit der Basis in einem Punkt verknüpft ist, der zwischen den extremen Punkten der Umsetzung des Tragelements liegt, und mit seinem anderen Ende mit der Plattform exzentrisch zu ihrer Rotationsachse in solcher Weise verknüpft ist, dass die Möglichkeit besteht, in den extremen Punkten der Umsetzung des Tragelements die Schaffung der in verschiedenen Richtungen gerichteten Drehmomenten sowie Fortsetzung der Bewegung des Gleitsteines in der geschlossenen Kulisse in derselben einseitigen Richtung zu gewährleisten.

Und auch dadurch, dass er die Vorrichtung für die Schaffung der Gegenwirkungsanstrengung gegen die Plattformrotation aufweist.

Und auch dadurch, dass die Vorrichtung für die Schaffung der Gegenwirkungsanstrengung gegen die Plattformrotation in der Form eines elastischen Elements ausgeführt ist, mittels dessen der Gleitstein mit der Plattform mit der Möglichkeit der Rotation rund um ihre Achse verknüpft ist.

Und auch dadurch, dass er die Elemente für die Neigung der Stützfläche hinsichtlich der Basis aufweist.

Und auch dadurch, dass der Slalomsimulator wenigstens ein Lagesicherungselement aufweist, das mit der Plattform verknüpft ist, und auf dem sich die Stützfläche befindet.

Und auch dadurch, dass das Lagesicherungselement beweglich mit der Plattform verknüpft ist, dabei besteht die Möglichkeit seiner Rotation rund um die Achse, die parallel seiner Stützungsfläche ist.

Und auch dadurch, dass er zwei Lagesicherungselemente aufweist, die beweglich mit der Plattform verknüpft sind, so dass die Möglichkeit der geradlinigen Rückwärts-Vorwärtsverschiebung hinsichtlich einander in Richtung der Längsachse von den auf der Stützfläche aufgestellten Füßen, von den Schiern bzw. von einem Snowboard besteht, und/oder dass die Möglichkeit ihrer Rotation hinsichtlich der Achsen, die parallel ihren Stützflächen sind, besteht.

Und auch dadurch, dass er einen Antrieb für die Umsetzung des Tragelements aufweist.

Und auch dadurch, dass er die Befestigungsvorrichtungen für die Schier, für ein Snowboard bzw. für die Schuhe des Slalomläufers auf der Stützfläche aufweist.

Und auch dadurch, dass er einen Stütz aufweist, der sich für die Schulter des Slalomläufers eignet und der auf der Basis befestigt ist.

Und auch dadurch, dass er ein Schleppseil aufweist, das mit seinem einen Ende auf der Basis befestigt ist.

Und auch dadurch, dass die Basis so ausgeführt ist, dass die Möglichkeit der Änderung ihrer Winkellage hinsichtlich der Fläche, auf der sie aufgestellt ist, besteht.

Und auch dadurch, dass die Plattform mit der Stützfläche so aufgestellt ist, dass die Möglichkeit einer kurzen Bewegung nach vorne auf den Endabschnitten der Umsetzung des Tragelements nach links - nach rechts besteht.

Die genannte Aufgabe und das technische Ergebnis werden mittels des Slalomimitators erreicht, der eine Basis, ein auf der Basis aufgestelltes Tragelement mit der Möglichkeit der Umsetzung nach links ― nach rechts, eine auf diesem aufgestellte Plattform mit der Stützfläche für die Füße, für die Schier bzw. für ein Snowboard mit der Möglichkeit der gleichzeitigen mit ihm Rotation periodisch im bzw. entgegen dem Uhrzeigersinn und eine Kurbelschleife für die Synchronisation und das Umsteuern von der genannten Umsetzung des Tragelements und der Plattformrotation enthält, und der dadurch gekennzeichnet ist, dass die Kulisse auf der Basis befestigt ist und mit einem Bewegungskreis des Gleitsteines ausgeführt wird, der in der Kulisse so aufgestellt ist, dass die Möglichkeit seiner Bewegung in der Kulisse in eine Richtung sowie eine Möglichkeit der Gewährleistung der Gesetzmäßigkeit der Plattformumsetzung hinsichtlich der Basis gemäß dem Slalombewegungsgrundsatz einschließlich der Translationsbewegung von den Füßen, von den Schiern bzw. von einem Snowboard nach links ― nach rechts sowie ihrer genannten gleichzeitigen Rotation und Umsetzung nach vorne bestehen.

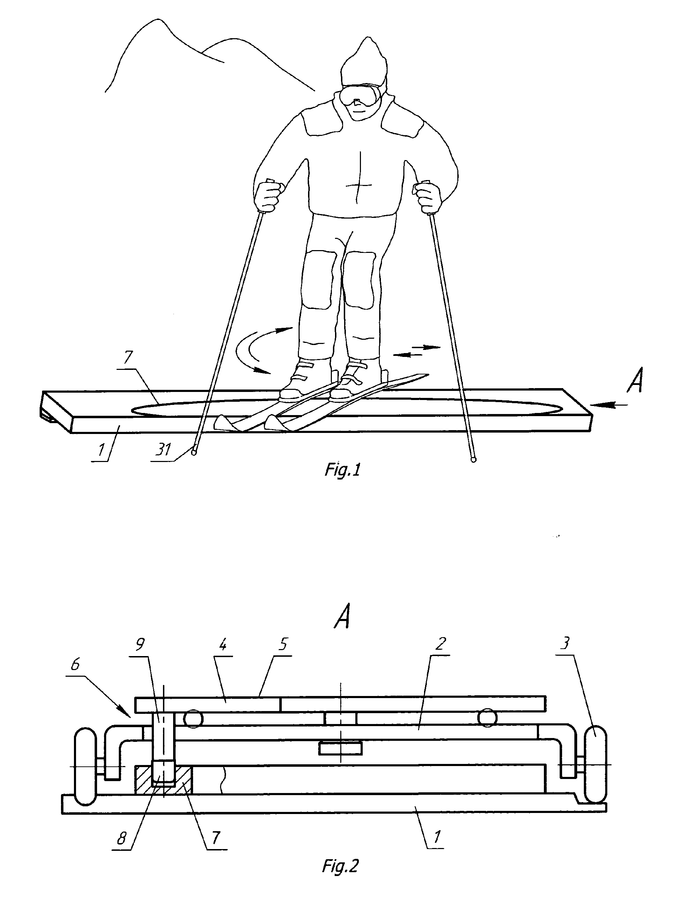

In Fig.1 sind der Slalomimitator und die Körperhaltung des Slalomläufers im mittleren Teil dieses Slalomimitators dargestellt (das Tragelement und die Plattform werden zur Vereinfachung nicht gezeigt);
In Fig.2 ist eine Seitenansicht des Slalomimitators in Pfeilrichtung A entsprechend Fig.1 dargestellt;

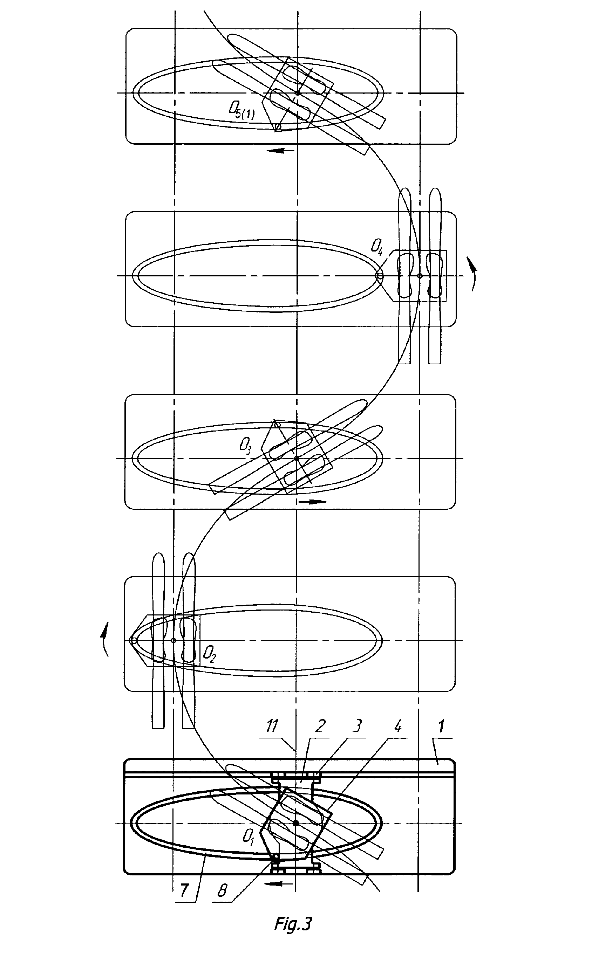

In Fig.3 ist eine Stellung von den Füßen (von den Schiern bzw. von einem Snowboard) auf dem Imitator und dementsprechend auf der Laufbahn der Slalomfahrt in den Eckpunkten des umschichtigen Umsteuerns der Tragelementsumsetzung und der Plattformrotation für eine Periode dargestellt;

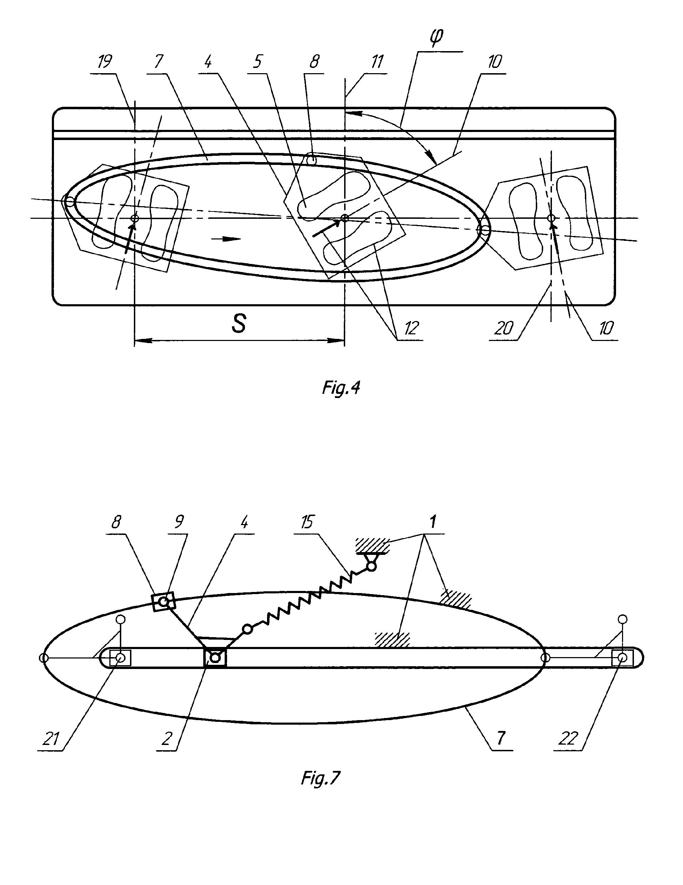

In Fig.4 sind der Slalomimitator sowie die Stellung von den Füßen (von der Plattform) im mittleren Teil des Slalomimitatos und in den extremen Punkten der Umsetzung nach links - nach rechts dargestellt (diese Abbildung ist eine Aufsicht und das Tragelement wird zur Vereinfachung nicht gezeigt);

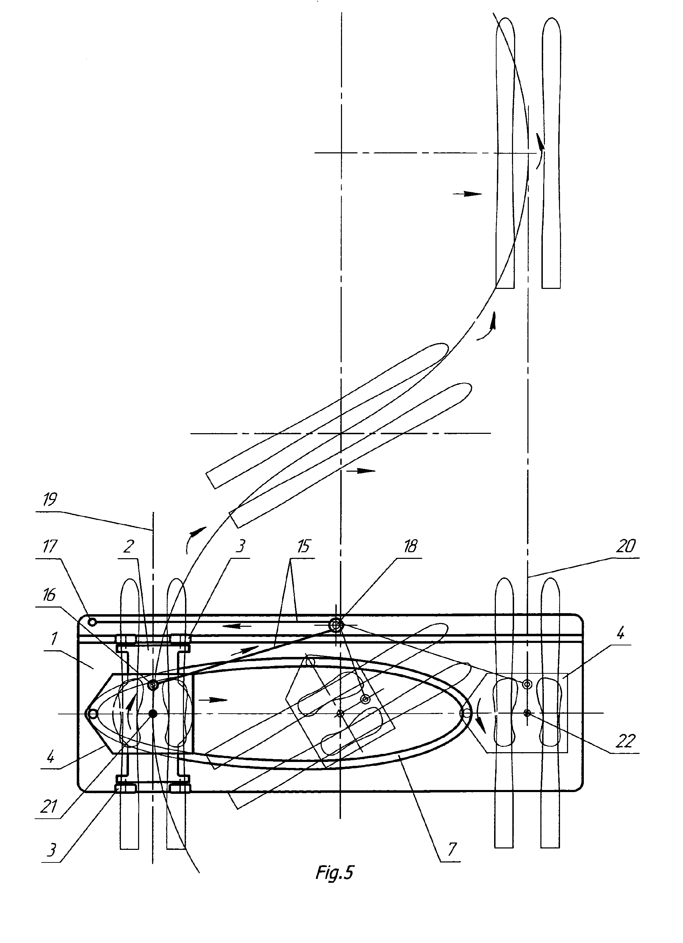

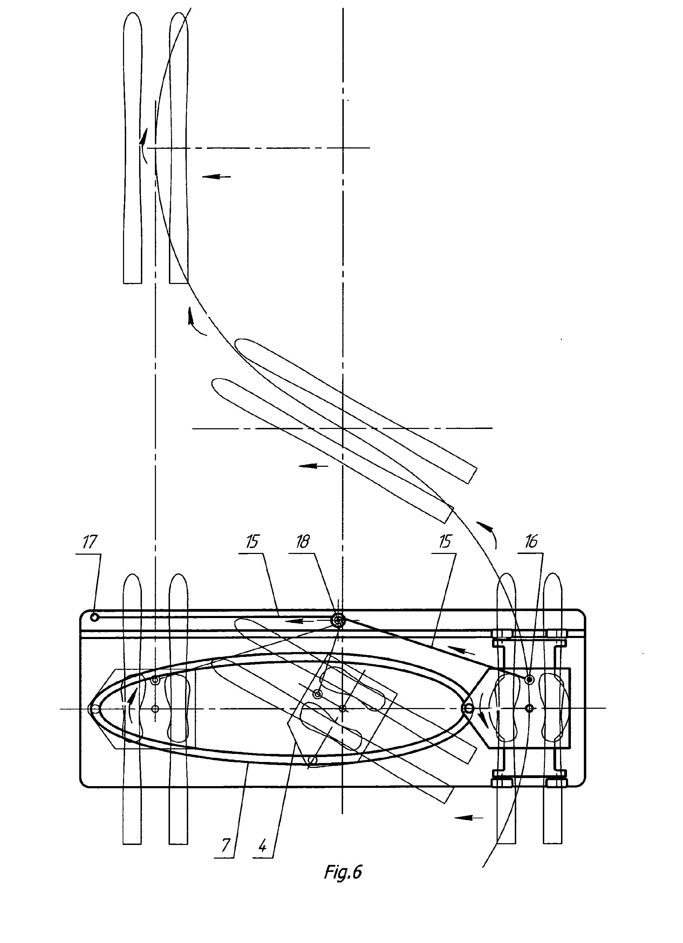

In den Fig.5 und 6 ist die Stellung von Elementen des Slalomimitators und der Schier bei der Umsetzung des Tragelements jeweils von der linken Außenlage in die rechte Außenlage sowie von der rechten Außenlage in die linke Außenlage dargestellt;

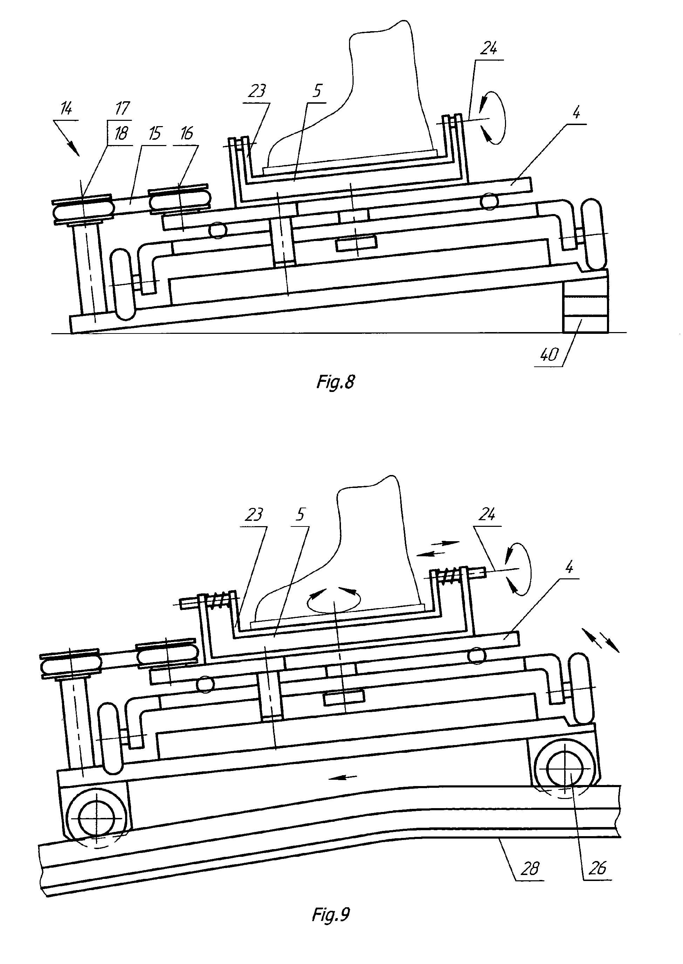

In Fig.7 ist ein Getriebeschema von dem Imitator dargestellt;
In Fig.8 ist die Konstruktion eines Lagesicherungselements dargestellt, das nur mit der Möglichkeit der Rotation (mit dem Kanteneinsatz) aufgestellt ist;
In Fig.9 ist die Konstruktion eines Lagesicherungselements dargestellt, das mit der Möglichkeit der Rotation und der Längsbewegung (mit dem Kanteneinsatz und der Disfooting) auf der Plattform des auf den Relsen aufgestellten Imitators, so aufgestellt ist, dass die Möglichkeit der Bewegung nach vorne auf der Achse der Slalomtrasse besteht;

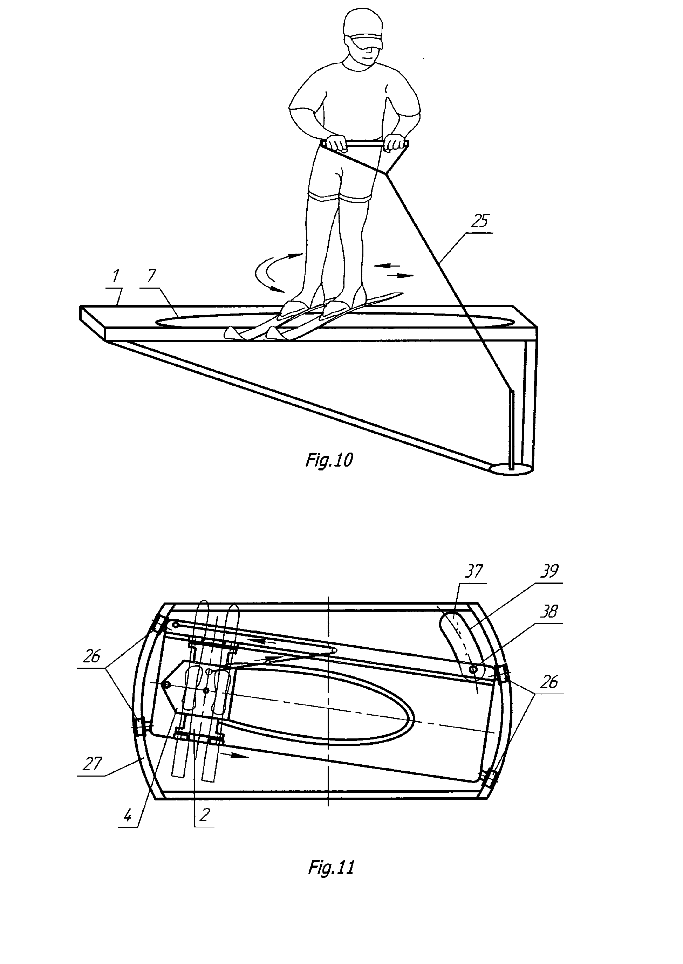

In Fig. 10 ist ein Wasserschiläufer - ein Slalomläufer in der mittleren Lage des Slalomimitators dargestellt, der mit einem Schleppseil versehen ist, das mit seinem einen Ende an der Basis befestigt ist;

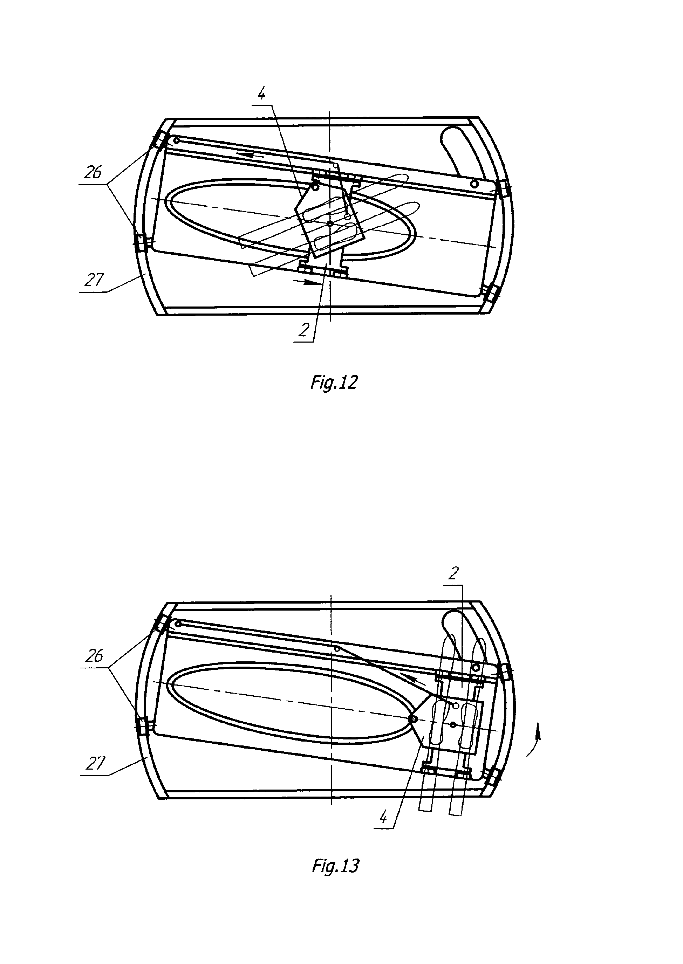

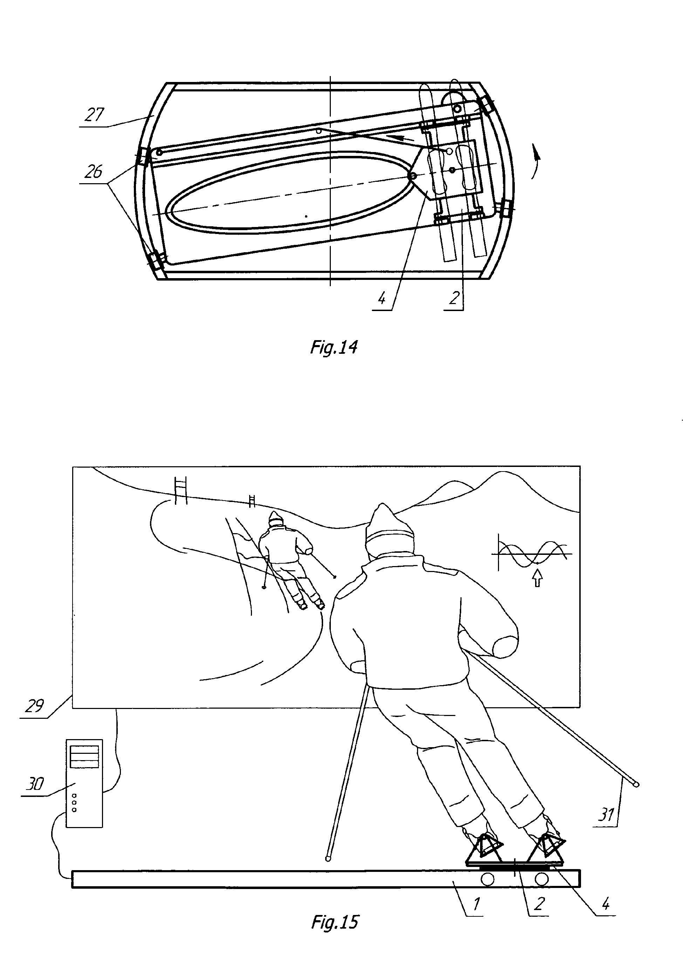

In den Fig.11-14 sind dargestellt: der Imitator mit den Elementen in den verschiedenen Stellungen bei der Umsetzung, bei denen die Plattform mit der Möglichkeit der kurzen Bewegung nach vorne auf den Endabschnitten der Umsetzung des Tragelements nach links - nach rechts aufgestellt ist, sowie die Vorrichtung für die Gegenwirkungsanstrengung gegen diese Bewegung nach vorne;
In Fig.15 ist ein Slalomläufer in der äußersten Lage auf dem Imitator vor dem Bildschirm mit dem Bild dargestellt, das sich mittels der Geber und eines Rechners synchronisch entsprechend der Umsetzung des Tragelements nach links - nach rechts und der Plattformrotation im bzw. entgegen dem Uhrzeigersinn ändert;
In Fig.16 ist ein Snowboarder in den äußersten Lagen auf dem Imitator dargestellt (Rückansicht);

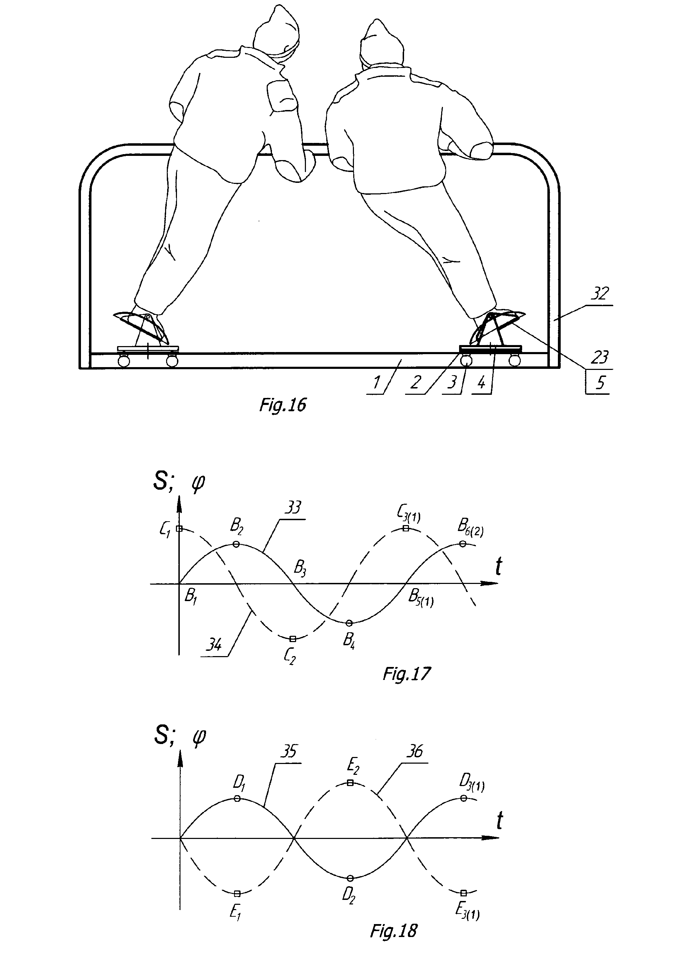

In den Fig.17 und 18 sind jeweils für den patentierten Imitator und für einen nächststehenden analogischen Imitator die grafischen Darstellungen des Grundsatzes der zusammengesetzten Plattformbewegung hinsichtlich der Basis des Slalomimitators abhängig von der Zeit t dargestellt, die besteht: aus der Translationsbewegung, d.h. einer Umsetzung des Tragelements auf den Abstand S nach links ― nach rechts hinsichtlich der Basis (die Bogenlinie ist als Volllinie dargestellt), sowie aus einer relativen Bewegung, d.h. einer Plattformdrehung für den ϕ-Winkel bei der Plattformrotation hinsichtlich des Tragelements (die Bogenlinie ist als Strichlinie dargestellt); in diesen grafischen Darstellungen sind die positiven Werte der Ordinatenachse S für die Stellungen des Tragelements links von der Achse der Slalomtrasse ausgewählt worden, indem die positiven Werte der Ordinatenachse ϕ für die Winkelstellungen der Plattform mit der Richtung der Längsachse von den Füßen mit den Fußpitzen, die bezüglich der Achsenrichtung der Slalomtrasse nach links gerichtet sind, ausgewählt worden sind.

Der Slalomimitator enthält: eine Basis 1, ein auf der Basis mit der Möglichkeit der Umsetzung nach links - nach rechts aufgestelltes Tragelement 2, das dafür beispielweise auf den Wälzlagern 3 aufgestellt wird, eine auf dem Tragelement 2 aufgestellte Plattform 4 mit der Stützfläche 5 für die Füße, für die Schier bzw. für ein Snowboard mit der Möglichkeit der gleichzeitigen mit ihm Rotation periodisch im bzw. entgegen dem Uhrzeigersinn sowie eine Kurbelschleife 6 für die Synchronisation und das Umsteuern der genannten Umsetzung des Tragelements 2 und der Rotation der Plattform 4, die umfasst: eine Kulisse 7, einen Gleitstein 8, der mit dem Dorn 9 verknüpft ist, der in der Plattform 4, die die Rolle eines Kurbels spielt, befestigt ist. Die Kulisse 7 ist auf der Basis 1 befestigt und wird mit einem Bewegungskreis des Gleitsteins 8 ausgeführt, der in der Kulisse 7 mit der Möglichkeit seiner Bewegung in der Kulisse in eine Richtung, z.B. im Uhrzeigersinn, sowie mit der Möglichkeit der Gewährleistung der Gesetzmäßigkeit der Umsetzung von Plattform 4 hinsichtlich der Basis 1 gemäß dem Slalombewegungsgrundsatz in Bezug auf die Translationsbewegung bei der Umsetzung von den Füßen des Slalomläufers, von den Schiern bzw. von einem Snowboard, die auf der Stützfläche 5 aufgestellt sind, nach links ― nach rechts und bei der Änderung ihrer Winkelstellung bei ihrer genannten Rotation.

Die Kulisse 7 hat eine Form, die bei der Bewegung des Gleitsteins 8 in dieser eine Rotation der Plattform 4 hinsichtlich der Basis 1 im Uhrzeigersinn bei der Umsetzung des Tragelements 2 von der Mittelstellung O₁ nach links bis zum extremen Punkt O₂ und zurück nach rechts bis zur Mittelstellung O₃ gewährleistet und ferner entgegen dem Uhrzeigersinn bei der Umsetzung des Tragelements 2 von der Mittelstellung O₃ nach rechts bis zum extremen Punkt O₄ und zurück nach links bis zur Mittelstellung O₅₍₁₎ gewährleistet sowie die Erreichung der maximalen Werte eines Winkels ϕ zwischen der Längsachse 10 von den auf der Stützfläche 5 aufgestellten Füßen, Schiern bzw. von einem Snowboard und der Symmetriefläche 11 der Lage der extremen Punkte der Umsetzung des Tragelements bei der Mittelstellung der Plattform zwischen den extremen Punkten O₂ und O₄ gewährleistet und die Erreichung des Null-Werts bzw. der minimalen Werte dieses Winkels bei der Lage der Plattform in den extremen Punkten gewährleistet.

Auf der Stützfläche 5 ist eine Markierung 12 der Richtung der Längsachse 10 von den Füßen des Slalomläufers, von den Schiern bzw. von einem Snowboard aufgetragen, die auf der genannten Stützfläche 5 aufgestellt werden. Die Markierung 12 kann z.B. mit Farbe ausgeführt werden bzw. auf die Stütze 5 gedruckt werden.

Der Slalomimitator weist eine Vorrichtung 13 (nicht dargestellt) auf, die eine Änderung der Bewegungsrichtung des Gleitsteines 8 in der Kulisse 7 und dementsprechend die Rotation der Plattform 4 in den extremen Punkten des Umsteuerns der Umsetzung des Tragelements 2 ausschließt. Diese Vorrichtung 13 kann z.B. in Form der Endfeder, die ein Drehmoment im Laufe der Bewegung des Gleitsteines 8 leistet, ausgeführt sein.

Der Slalomimitator weist eine Vorrichtung 14 für die Schaffung der Gegenwirkungsanstrengung in Bezug auf die Umsetzung des Tragelements 2 vom mittleren Teil der Laufbahn in Richtung der extremen Punkten seiner Umsetzung auf.

Die genannte Vorrichtung 14 für die Schaffung der Gegenwirkungsanstrengung in Bezug auf die Umsetzung des Tragelements 2 kann in der Form von wenigstens einem elastisch deformierenden Kraftzug 15 ausgeführt werden, der mit seinem einen Ende 16 mit dem Tragelement 2 und mit seinem anderen Ende 17 mit der Basis 1 mit der Biegung wenigstens durch einen Block 18 verknüpft ist, der auf der Basis 1 in einem Punkt befestigt ist, der zwischen den Flächen 19 und 20 liegt, die senkrecht zur Umsetungsrichtung des Tragelements 2 sind und die sich durch die extremen Punkte 21 und 22 der Umsetzung des Tragelements 2 ziehen.

Der elastisch deformierende Kraftzug 15 kann auch als eine Vorrichtung dienen, die die Änderung der Bewegungsrichtung des Gleitsteines 8 in der Kulisse 7 und dementsprechend die Rotation der Plattform 4 in den extremen Punkten des Umsteusms der Umsetzung des Tragelements 2 ausschließt und die gleichzeitig die Gegenwirkungsanstrengung gegen die Umsetzung des Tragelements 2 vom mittleren Teil der Laufbahn in Richtung der extremen Punkte seiner Umsetzung schafft. Dafür ist das andere Ende 16 des Kraftzugs 15 mit der Plattform 4 exzentrisch zu ihrer Rotationsachse in solcher Weise verknüpft, dass die Möglichkeit besteht, in den extremen Punkten der Umsetzung des Tragelements 2 die Schaffung der in verschiedenen Richtungen gerichteten Drehmomente sowie Fortsetzung der Bewegung des Gleitsteines 8 in der geschlossenen Kulisse 7 in derselben einseitigen Richtung zu gewährleisten.

Der Slalomimitator weist auch die Vorrichtung für die Schaffung der Gegenwirkungsanstrengung (nicht gezeigt) gegen die Rotation der Plattform 4.

Diese Vorrichtung für die Schaffung der Gegenwirkungsanstrengung (nicht gezeigt) gegen die Plattformrotation kann in der Form eines elastischen Elements ausgeführt sein, mittels dessen der Gleitstein mit der Plattform mit der Möglichkeit der Rotation rund um ihre Ache verknüpft ist.

Der Slalomimitator enthält die Elemente (nicht gezeigt) für die Neigung der Stützfläche 5 hinsichtlich der Basis 1.

Der Slalomimitator kann wenigstens ein Lagesicherungselement 23 enthalten, das mit der Plattform 4 verknüpft ist, und die Stützfläche 5 ist auf dem Lagesicherungselement 23 ausgeführt

Das Lagesicherungselement 23 ist beweglich mit der Plattform 4 mit der Möglichkeit der Rotation hinsichtlich der Achse 24, die parallel seiner Stützfläche 5 ist, verknüpft.

Der Slalomimitator kann zwei Lagesicherungselemente aufweisen, die beweglich mit der Plattform 4 verknüpft sind, so dass die Möglichkeit der geradlinigen Rückwärts-Vorwärtsschiebung hinsichtlich einander in Richtung der Längsachse von den auf der Stützfläche 5 aufgestellten Füßen bzw. Schiern besteht und/oder dass die Möglichkeit ihrer Rotation hinsichtlich der Achsen, die parallel ihren Stützflächen sind, besteht, analog einem obengenannten Lagesicherungselement.

Der Slalomimitator kann einen Antrieb (nicht gezeigt) der Umsetzung des Tragelements 2 sowie die Bindungen (nicht gezeigt) von den Schiern, von einem Snowboard bzw. von den Schuhen des Slalomläufers auf der Stützfläche 5 aufweisen.

Der Slalomimitator kann sowohl einen Stütz (nicht gezeigt) beispielsweise in der Form einer Wand für die Schulter des Slalomläufers enthalten, der auf der Basis 1 befestigt ist, als auch ein Schleppseil 25 aufweisen, das mit seinem einen Ende an der Basis 1 befestigt ist.

Die Basis 1 kann mit der Möglichkeit der Änderung ihrer Winkellage hinsichtlich der Fläche ausgeführt werden, auf der sie aufgestellt wird.

Die Plattform 4 mit der Stützfläche 5 kann mit der Möglichkeit der kurzen Bewegung nach vorne auf den Endabschnitten der Umsetzung des Tragelements 2 nach links - nach rechts aufgestellt werden. Dafür wird die Basis 1 z.B. auf den Rolleneinheiten 26 aufgestellt, die sich gemäß den Führungen 27 bewegen.

Der Slalomimitator kann mit der Möglichkeit der Gewährleistung der Gesetzmäßigkeit der Plattformumsetzung hinsichtlich der Basis gemäß dem Slalombewegungsgrundsatz, einschließlich der Translationsbewegung von den Füßen, von den Schiern bzw. von einem Snowboard nach links ― nach rechts sowie ihrer genannten gleichzeitigen Rotation und Bewegung nach vorne, ausgeführt werden. Dafür wird die Basis 1 z.B. auf den Schienen 28 (auf Fig. 9) bzw. auf dem Wagen (nicht gezeigt) aufgestellt und auf diese Weise setzt sie sich nach vorne in Richtung der Achse der Slalomtrasse um.

Vor dem Slalomimitator kann ein Bildschirm 29 mit einem Bild aufgebaut werden, das von dem Computer 30 gesteuert wird, der mit den Gebern verbunden ist, die für die Bestimmung ihrer Stellungen bei der Umsetzung nach links - nach rechts und bei der Rotation im bzw. entgegen dem Uhrzeigersinn auf den bestimmten Elementen des Imitators aufgestellt sind. Das Bild von einer Slalomtrasse auf dem Bildschirm verändert sich entsprechend der Lage des Slalomläufers (der Plattform) an einem bestimmten Punkt des Imitators.

Die zu patentierende Schulungs- und Trainingsmethode des Slalomläufers wird in der folgenden Vorgehensweise realisiert.

Der Slalomläufer (ein Schifahrer, ein Snowboarder, ein Wasserschiläufer - ein Benutzer des Imitators) stellt die Füße auf ein Lagesicherungselement 23 bzw. auf die Schier oder auf ein Snowboard, die jeweils auf der Stützfläche 5 entsprechend der Markierung 12 befestigt sind, und verwirklicht die Umsetzung des Tragelements 2 periodisch nach links - nach rechts gestützt auf die Stöcke 31 bzw. auf eine Handgriffstange 32 oder Schleppseil 25 gehalten; und dadurch verwirklicht er die Umsetzung von den Füßen, von den Schiern bzw. von einem Snowboard hinsichtlich der Basis 1. Dabei befinden sich die Füße des Slalomläufers schräg zur Basis 1 (die Füße sind hinsichtlich des Schwerpunkts des Slalomläufers bei der Plattformrotation im Uhrzeigersinn nach links und bei der Plattformrotation entgegen dem Uhrzeigersinn nach rechts verschoben); ähnlich der Stellung in einer Kurve beim Gleiten während einer echten Slalomschifahrt.

Gleichzeitig mit der genannten Umsetzung des Tragelements 2 erfolgt sowohl die Rotation der Plattform 4 mit der Stützfläche 5 periodisch im bzw. entgegen dem Uhrzeigersinn, als auch eine analogische Rotation von den Füßen, von den Schiern bzw. von einem Snowboard im bzw. entgegen dem Uhrzeigersinn als Folge.

Die genannte Rotation der Plattform 4 wird mittels der Kurbelschleife 6 bei der Bewegung des Gleitsteines 8 in der Kulisse 7 sowie mittels der Umsetzung des Dornes 9, der exzentrisch auf der Plattform 4 befestigt ist, verwirklicht.

Das Umsteuern der genannten Umsetzung des Tragelements 2 und der Rotation der Plattform 4 mit dem Lagesicherungselement 23 (und dadurch auch der Füße des Slalomläufers, der Schier bzw. eines Snowboards) wird nacheinander (in Fig. 17 in den Punkten C₁, B₂, C₂, B₄, C₃₍₁₎, B₆₍₂₎) mit der Verschiebung der Anfangsphasen von diesen Bewegungen verwirklicht, dabei entspricht die Gesetzmäßigkeit der genannten Umsetzung des Tragelements 2 auf den Abstand S nach links - nach rechts hinsichtlich der Basis 1 (in Fig. 17 als Volllinie 33 dargestellt) und der genannten Drehung der Plattform 4 für den ϕ-Winkel bei der Plattformrotation hinsichtlich des Tragelements 2 (in Fig. 17 als Strichlinie 34 dargestellt) für eine Periode den Grundsätzen der Slalombewegungen in Bezug auf die Translationsbewegung bei der Umsetzung von den Füßen des Slalomläufers, von den Schiern bzw. von einem Snowboard nach links ― nach rechts und in Bezug auf die relative Bewegung, d.h. die Änderung ihrer Winkelstellung bei der genannten Rotation von diesen.

Das wird dadurch realisiert, dass man die genannte Plattformrotation (Rotation von den Füßen, von den Schiern bzw. von einem Snowboard) hinsichtlich der Basis 1 im Uhrzeigersinn (in Fig. 17 vom Punkt C₁ bis zum Punkt C₂ auf der Strichlinie) bei der Umsetzung des Tragelelments 2 (von den Füßen, von den Schiern bzw. von einem Snowboard) hinsichtlich der Basis 1 von der Mittelstellung (Punkt B₁ in Fig. 17) nach links bis zum extremen Punkt (Punkt B₂) und zurück nach rechts bis zur Mittelstellung (Punkt B₃) durchführt, und ferner entgegen dem Uhrzeigersinn (vom Punkt C₂ bis zum Punkt C3₍₁₎) bei der Umsetzung des Tragelements 2 (von den Füßen, von den Schiern bzw. von einem Snowboard) hinsichtlich der Basis von der mittleren Lage (Punkt B₃) nach rechts bis zum extremen Punkt (Punkt B₄) und zurück nach links bis zur mittleren Lage (Punkt B₅₍₁₎) durchführt; dabei erreicht der Winkel ϕ zwischen der Längsachse 10 der Füße, der Schier bzw. eines Snowboards und der Spiegelebene 11 der Lage der extremen Punkte ihrer Umsetzung seine maximalen Werte bei der Fußposition in der Mittelstellung zwischen den extremen Punkten; seinen Null-Wert bzw. seine minimalen Werte in den extremen Punkten.

Für die Vereinfachung des Vergleichs sind in Fig.18, die analog einen Imitator nach dem nächsten darstellt, die ähnlichen Gesetzmäßigkeiten in Form von den Kurven 35 und 36 dargestellt, die die Gleichzeitigkeit des Umsteuerns der genannten Umsetzung des Tragelements und der Plattformrotation (in Fig. 18 sind das die Punkte D₁ und E₁, D₂ und E₂, D₃₍₁₎) und E₃₍₁₎) abspiegeln; das entspricht jedoch nicht den Grundsätzen der Slalombewegung und kann zum Beispiel beim realen Schilaufen eine Bewegung in der Form des seitlichen Rutschens (quer über die Kanten), und nicht in Richtung der Längsachse der Schier bzw. eines Snowboards (entlang der Kanten) bedeuten, was letzten Endes nicht zulässt, die korrekten Fertigkeiten von der Slalomtechnik zu erwerben

Beim Umsteuern des Tragelements 2, das bei der Bewegung des Gleitsteines 8 durch die Strecke in der Kulisse 7 in den extremen Punkten erfolgt, wirkt der Gleitstein mit der Vorrichtung 13 zusammen, die eine Richtungsänderung seiner Bewegung in der Kulisse dadurch ausschließt, dass eine zusätzliche Anstrengung auf den Gleitstein entsteht, die mit der Richtung seiner Bewegung zusammenfällt.

Die genannnte Umsetzung des Tragelements 2 (der Füße, Schier bzw. eines Snowboards) nach links - nach rechts und die Rotation der Plattform 4 periodisch im bzw. entgegen dem Uhrzeigersinn wird frei unter der Anstrengung des Slalomläufers bzw. zwangsläufig durch einen Umsetzungsantrieb verwirklicht, was unter anderem ermöglicht, die Trainingsbedingungen an die realen Bedingungen auf einer Slalompiste anzunähern.

Bei der genannten Umsetzung des Tragelements (der Füße, Schier bzw. eines Snowboards) nach links - nach rechts verwirklicht man die Gegenwirkung gegen die genannte Umsetzung z.B mittels des elastisch deformierenden Kraftzugs 15.

Die genannte Umsetzung des Tragelements (der Füße, Schier bzw. eines Snowboards) nach links - nach rechts und die Plattformrotation periodisch im bzw. entgegen dem Uhrzeigersinn wird mit dem Kantenainsatz und/oder Disfooting mittels der Lagesicherungselemente 23 verwirklicht, die so aufgestellt sind, dass die Möglichkeit der Rotation hinsichtlich der Achse, die parallel der Stützfläche ist, sowie die Möglichkeit der längslaufenden Umsetzung hinsichtlich einander dadurch besteht, dass die Lagesicherungselemente 23 mit der Plattform 4 beweglich mittels den entsprechenden kinematischen Paaren verknüpft sind.

Um ein Gefühl von einem realen Slalom entstehen zu lassen, verwirklicht man die genannte Rotation der Plattform 4 (der Füße, Schier bzw. eines Snowboard) periodisch im bzw. entgegen dem Uhrzeigersinn mit der kurzen Bewegung nach vorne auf den Endabschnitten ihrer genannten Umsetzung nach links - nach rechts dadurch, dass das Tragelement 2 auf den Rollelementen 26 aufgestellt wird und dass es sich wegen einer Einwirkung des Beharrungsmoments von der Rotation des Slalomläufers auf der Plattform 4 ein bisschen nach vorne (gemäß den Führungen drehend 27) bewegen kann; dabei wird ein Widerstand gegen die genannte kurze Bewegung nach vorne auftreten, zum Beispiel von Seiten des Sandes 37, mit dem das Tragelement 2 beispielsweise mittels des besonderen Bolzens 38 zusammenwirkt, der mit diesem verknüpft und in den Behälter 39 mit dem Sand 37 platziert ist.

Außerdem führt man die genannte Rotation der Plattform 4 (der Füße, Schier bzw. eines Snowboards) periodisch im bzw. entgegen dem Uhrzeigersinn in der Fläche durch, die zu der horizontalen Fläche nach vorne in Bezug auf den Slalomläufer geneigt ist; dafür wird die Basis auf den besonderen Elemente 40 aufgestellt, um die genannte Neigung des Imitators zu gewährleisten.

Der Imitator mit der Möglichkeit der Umsetzung nach vorne in Richtung der Achse einer Piste ermöglicht die Verwirklichung der zu patentierenden Methode die Verwirklichung gemäß dem Grundgesetz der Slalombewegung, einschließlich der Translationsbewegung von den Füßen, von den Schiern bzw. von einem Snowboard nach links ― nach rechts sowie ihrer gleichzeitigen Rotation und Umsetzung nach vorne, wodurch das Training noch näher an die realen Slalombedingungen gebracht wird.

Durch das Vorhandensein eines Bildschirms 29 vor dem Imitator entsteht die Möglichkeit für die Schaffung eines virtuellen Gefühls von einem Training auf einer realen Slalompiste, weil die abwechselnden Abbildungen auf dem Bildschirm, die während einer realen Abfahrt auf einer Piste fotografiert worden sind, den bestimmten Stellungen der Imitatorelemente entsprechen, und folglich die Empfindungen des Slalomläufers den Empfindungen ähneln, die dieser während der Abfahrt auf einer realen Slalompiste hätte.

Hierdurch ermöglicht es die patentierte Schulungs- und Trainingsmethode jedem Slalomläufer bzw. jedem Menschen, der das Slalomlaufen lernen will, die Effizienz (die forciert ist und die maximal die Realität imitiert,) von der Schulung der Slalomtechnik und vom Training für die Erhaltung der Fertigkeiten zu erhöhen, beispielsweise während der Zeit zwischen den Saisons außerhalb der Schneepisten durch die Bildung und Einübung von Fertigkeiten.

## Patentansprüche

1. Die Schulungs- und Trainingsmethode des Slalomläufers, die eine Umsetzung von den Füßen des Slalomläufers, von den Schiern bzw. von einem Snowboard hinsichtlich der Basis periodisch nach links - nach rechts und ihre gleichzeitige Rotation periodisch im bzw. entgegen dem Uhrzeigersinn sowie das Umsteuern der genannten Umsetzung und Rotation von den Füßen des Slalomläufers, von den Schiern bzw. von einem Snowboard einbezieht, **dadurch gekennzeichnet, dass** man die genannte Umsetzung und Rotation von den Füßen des Slalomläufers, von den Schiern bzw. von einem Snowboard mit der Neigung der Beine des Slalomläufers hinsichtlich der Basis durchführt sowie **dadurch**, dass man das Umsteuern der genannten Umsetzung und Rotation von den Füßen des Slalomläufers, von den Schiern bzw. von einem Snowboard nacheinander mit einer Anfangsphasenverschiebung dieser Bewegungen durchführt; dabei entspricht die Gesetzmäßigkeit der genannten Umsetzung und Rotation von den Füßen des Slalomläufers, von den Schiern bzw. von einem Snowboard hinsichtlich der Basis für eine Periode den Slalombewegungsgrundsätzen in Bezug auf die Translationsbewegung bei der Umsetzung von den Füßen des Slalomläufers, von den Schiern bzw. von einem Snowboard nach links ― nach rechts und in Bezug auf die Änderung von deren Winkellage bei deren genannter Rotation.

2. Die Schulungs- und Trainingsmethode des Slalomläufers nach Anspruch 1, **dadurch gekennzeichnet, dass** die genannte Rotation von den Füßen, von den Schiern bzw. von einem Snowboard hinsichtlich der Basis im Uhrzeigersinn bei der Umsetzung von den Füßen, von den Schiern bzw. von einem Snowboard hinsichtlich der Basis von der Mittelstellung nach links bis zum extremen Punkt und zurück nach rechts bis zur Mittelstellung und ferner entgegen dem Uhrzeigersinn bei der Umsetzung von den Füßen, von den Schiern oder von einem Snowboard hinsichtlich der Basis von der Mittelstellung nach rechts bis zum extremen Punkt und zurück nach links bis zur Mittelstellung erfolgt; dabei erreicht der Winkel zwischen der Längsachse der Füße, der Schier bzw. eines Snowboards und der Spiegelebene in der Lage der extremen Punkten ihrer Umsetzung seine maximalen Werte bei der Fußposition in der Mittelstellung zwischen den extremen Punkten; seinen Null-Wert bzw. seine minimalen Werte in den extremen Punkten.

3. Die Schulungs- und Trainingsmethode des Slalomläufers nach Anspruch 1, **dadurch gekennzeichnet, dass** die genannte Umsetzung von den Füßen, von den Schiern bzw. von einem Snowboard nach links - nach rechts und ihre Rotation periodisch im bzw. entgegen dem Uhrzeigersinn frei durch die Bemühungswirkung des Slalomläufers oder zwangsweise durch einen Umsetzungsantrieb erfolgt.

4. Die Schulungs- und Trainingsmethode des Slalomläufers nach Anspruch 1, **dadurch gekennzeichnet, dass** man bei der genannten Umsetzung von den Füßen, von den Schiern bzw. von einem Snowboard nach links - nach rechts eine Gegenwirkung der genannten Umsetzung verwirklicht.

5. Die Schulungs- und Trainingsmethode des Slalomläufers nach Anspruch 1, **dadurch gekennzeichnet, dass** die genannte Umsetzung von den Füßen, von den Schiern bzw. von einem Snowboard nach links - nach rechts und ihre Rotation periodisch im bzw. entgegen dem Uhrzeigersinn mit dem Kanteneinsatz und/oder mit der Disfooting erfolgt.

6. Die Schulungs- und Trainingsmethode des Slalomläufers nach Anspruch 1, **dadurch gekennzeichnet, dass** man die genannte Rotation von den Füßen, von den Schiern bzw. von einem Snowboard periodisch im bzw. entgegen dem Uhrzeigersinn mit der kurzen Bewegung nach vorne auf den Endabschnitten von deren Umsetzung nach links - nach rechts durchführt.

7. Die Schulungs- und Trainingsmethode des Slalomläufers nach Anspruch 1, **dadurch gekennzeichnet, dass** die genannte Rotation von den Füßen, von den Schiern bzw. von einem Snowboard periodisch im bzw. entgegen dem Uhrzeigersinn auf einer Fläche verwirklicht wird, die zur horizontalen Fläche nach vorne in Bezug auf den Slalomläufer geneigt ist.

8. Die Schulungs- und Trainingsmethode des Slalomläufers, die eine Umsetzung von den Füßen des Slalomläufers, von den Schiern bzw. von einem Snowboard hinsichtlich der Basis periodisch nach links - nach rechts und ihre gleichzeitige Rotation periodisch im bzw. entgegen dem Uhrzeigersinn sowie das Umsteuern der genannten Umsetzung und Rotation von den Füßen des Slalomläufers, von den Schiern bzw. von einem Snowboard einbezieht, **dadurch gekennzeichnet, dass** die genannte Umsetzung und Rotation von den Füßen des Slalomläufers, von den Schiern bzw. von einem Snowboard mit der Neigung der Beine des Slalomläufers hinsichtlich der Basis erfolgt und dass man das Umsteuern der genannten Umsetzung und Rotation von den Füßen des Slalomläufers, von den Schiern bzw. von einem Snowboard nacheinander mit einer Anfangsphasenverschiebung dieser Bewegungen durchführt; dabei entspricht die Gesetzmäßigkeit der genannten Umsetzung und Rotation von den Füßen des Slalomläufers, von den Schiern bzw. von einem Snowboard hinsichtlich der Basis für eine Periode den Slalombewegungsgrundsätzen, einschließlich der Translationsbewegung von den Füßen, von den Schiern bzw. von einem Snowboard nach links - nach rechts mit deren genannter gleichzeitiger Rotation und Bewegung nach vorne.

9. Der Slalomimitator, der eine Basis, ein auf ihr aufgestelltes Tragelement, das sich nach links - nach rechts bewegen kann, eine auf diesem aufgestellte Plattform, die eine mit diesem gleichzeitige Rotation periodisch im bzw. entgegen dem Uhrzeigersinn gewährleisten kann und die eine Stützfläche für die Füße des Slalomläufers, für die Schier bzw. für ein Snowboard sowie einen Kurbelschleifentrieb für die Synchronisation und das Umsteuern von genannter Umsetzung des Tragelements und der Plattformrotation aufweist, **dadurch gekennzeichnet, dass** die Kulisse auf der Basis befestigt ist und mit einer geschlossenen Laufbahn der Bewegung eines Gleitsteins ausgeführt ist; dieser ist in der Kulisse so aufgestellt, dass eine Möglichkeit seiner Bewegung in der Kulisse in eine Richtung und eine Möglichkeit der Gewährleistung der Gesetzmäßigkeit von einer Plattformumsetzung hinsichtlich der Basis gemäß dem Slalombewegungsgrundsatz in Bezug auf die Translationsbewegung bei der Umsetzung von den Füßen des Slalomläufers, von den Schiern bzw. von einem Snowboard nach links ― nach rechts und in Bezug auf die Änderung ihrer Winkellage bei deren genannten Rotation besteht.

10. Der Slalomimitator nach Anspruch 9, **dadurch gekennzeichnet, dass** die Kulisse eine Form hat, die bei der Gleitsteinbewegung in ihr die Rotation der Plattform hinsichtlich der Basis im Uhrzeigersinn bei der Umsetzung des Tragelements von der Mittelstellung nach links bis zum extremen Punkt und zurück nach rechts bis zur Mittelstellung und ferner entgegen dem Uhrzeigersinn bei der Umsetzung des Tragelements von der Mittelstellung nach rechts bis zum extremen Punkt und zurück nach links bis zur Mittelstellung gewährleistet; sowie die Erreichung der maximalen Werte des Winkels zwischen der Längsachse von den auf der Stützfläche aufgestellten Füßen, den Schiern bzw. einem Snowboard und der Spiegelebene in der Lage der extremen Punkte der Umsetzung des Tragelements bei der Lage der Plattform in der Mittelstellung zwischen den extremen Punkten gewährleistet sowie auch die Erreichung des Null-Werts bzw. der minimalen Werte dieses Winkels bei der Lage der Plattform in den extremen Punkten gewährleistet.

11. Der Slalomimitator nach Anspruch 9, **dadurch gekennzeichnet, dass** auf der Stützfläche eine Markierung der Richtung von der Längsachse der Füße des Slalomläufers, von den Schiern bzw. von einem Snowboard aufgetragen ist, die auf der genannten Stützfläche aufgestellt werden.

12. Der Slalomimitator nach Anspruch 9, **dadurch gekennzeichnet, dass** er eine Vorrichtung aufweist, die eine Änderung der Bewegungsrichtung des Gleitsteines in der Kulisse und dementsprechend die Plattformrotation in den extremen Punkten des Umsteuerns von der Umsetzung des Tragelements ausschließt.

13. Der Slalomimitator nach Anspruch 9, **dadurch gekennzeichnet, dass** er eine Vorrichtung für die Schaffung der Gegenwirkungsanstrengung in Bezug auf die Umsetzung des Tragelements von der Mittelstellung der Laufbahn in Richtung der extremen Punkte seiner Umsetzung aufweist.

14. Der Slalomimitator nach Anspruch 13, **dadurch gekennzeichnet, dass** die Vorrichtung für die Schaffung der Gegenwirkungsanstrengung in Bezug auf die Umsetzung des Tragelements in der Form von wenigstens einem elastisch deformierenden Kraftzug ausgeführt ist, der mit seinem einen Ende mit dem Tragelement und mit seinem anderen Ende mit der Basis mit der Biegung wenigstens durch einen Block verknüpft ist, der auf der Basis in einem Punkt befestigt ist, der zwischen den Flächen liegt, die senkrecht zu der Richtung der Umsetzung des Tragelements sind und die sich durch die extremen Punkte der Umsetzung des Tragelements ziehen.

15. Der Slalomimitator nach Anspruch 9, **dadurch gekennzeichnet, dass** er eine Vorrichtung aufweist, die eine Änderung der Bewegungsrichtung des Gleitsteines in der Kulisse und dementsprechend die Plattformrotation in den extremen Punkten des Umsteuerns von der Umsetzung des Tragelements ausschließt und die gleichzeitig die Gegenwirkungsanstrengung in Bezug auf die Umsetzung des Tragelements vom mittleren Teil der Laufbahn in Richtung der extremen Punkte seiner Umsetzung schafft.

16. Der Slalomimitator nach Anspruch 15, **dadurch gekennzeichnet, dass** die Vorrichtung, die die Änderung der Bewegungsrichtung des Gleitsteines in der Kulisse und dementsprechend die Plattformrotation in den extremen Punkten des Umsteuerns von der Umsetzung des Tragelements ausschließt und die gleichzeitig die Gegenwirkungsanstrengung in Bezug auf die Umsetzung des Tragelements vom mittleren Teil der Laufbahn in Richtung der extremen Punkte seiner Umsetzung schafft, in der Form von wenigstens einem elastisch deformierenden Kraftzug ausgeführt ist, der mit seinem einen Ende mit der Basis in dem Punkt verknüpft ist, der zwischen den extremen Punkten der Umsetzung des Tragelements liegt und mit seinem anderen Ende mit der Plattform exzentrisch zur ihren Rotationsachse in solcher Weise verknüpft ist, dass die Möglichkeit besteht, in den extremen Punkten der Umsetzung des Tragelementes die Schaffung von in verschiedenen Richtungen gerichteten Drehmomenten sowie die Versorgung von der Fortsetzung der Gleitsteinbewegung in der geschlossenen Kulisse in derselben einseitigen Richtung zu gewährleisten.

17. Der Slalomimitator nach Anspruch 9, **dadurch gekennzeichnet, dass** er die Vorrichtung für die Schaffung der Gegenwirkungsanstrengung in Bezug auf die Plattformrotation aufweist.

18. Der Slalomimitator nach Anspruch 17, **dadurch gekennzeichnet, dass** die Vorrichtung für die Schaffung der Gegenwirkungsanstrengung in Bezug auf die Plattformrotation in der Form eines elastischen Elements ausgeführt ist, mittels dessen der Gleitstein mit der Plattform so verknüpft ist, dass die Möglichkeit seiner Rotation rund um die Plattformachse besteht.

19. Der Slalomimitator nach Anspruch 9, **dadurch gekennzeichnet, dass** er die Elemente für die Neigung der Stützfläche hinsichtlich der Basis aufweist.

20. Der Slalomimitator nach Anspruch 9, **dadurch gekennzeichnet, dass** er wenigstens ein Lagesicherungselement aufweist, das mit der Plattform verknüpft ist, und sich die Stützfläche auf dem Lagesicherungselement ausgeführt ist.

21. Der Slalomimitator nach Anspruch 20, **dadurch gekennzeichnet, dass** das Lagesicherungselement beweglich mit der Plattform mit der Rotationsmöglichkeit rund um die Achse, die parallel seiner Stützungsfläche ist, verknüpft ist.

22. Der Slalomimitator nach Anspruch 20, **dadurch gekennzeichnet, dass** er zwei Lagesicherungselemente aufweist, die beweglich mit der Plattform verknüpft sind, so dass die Möglichkeit ihrer geradlinigen Rückwärts-Vorwärtsverschiebung hinsichtlich einander in Richtung der Längsachse von den auf der Stützfläche aufgestellten Füßen, Schiern bzw. von einem Snowboard besteht, und/oder die Möglichkeit ihrer Rotation hinsichtlich der Achsen, die parallel ihren Stützflächen sind, besteht.

23. Der Slalomimitator nach Anspruch 9, **dadurch gekennzeichnet, dass** er einen Antrieb der Umsetzung des Tragelementes aufweist.

24. Der Slalomimitator nach Anspruch 9, **dadurch gekennzeichnet, dass** er die Befestigungsvorrichtungen für die Schier, für ein Snowboard bzw. für die Schuhe des Slalomläufers auf der Stützfläche aufweist.

25. Der Slalomimitator nach Anspruch 9, **dadurch gekennzeichnet, dass** er einen Stütz aufweist, der sich für die Schulter des Slalomläufers eignet und die auf der Basis befestigt ist.

26. Der Slalomimitator nach Anspruch 9, **dadurch gekennzeichnet, dass** er ein Schleppseil aufweist, das mit seinem einen Ende auf der Basis befestigt ist.

27. Der Slalomimitator nach Anspruch 9, **dadurch gekennzeichnet, dass** die Basis mit der Möglichkeit der Änderung ihrer Winkellage hinsichtlich der Fläche, auf der sie aufgestellt ist, ausgeführt ist.

28. Der Slalomimitator nach Anspruch 9, **dadurch gekennzeichnet, dass** die Plattform mit der Stützfläche mit der Möglichkeit einer kurzen Bewegung nach vorne bei der Umsetzung des Tragelements nach links - nach rechts auf den Außenbereichen der Laufbahn besteht, aufgestellt ist.

29. Der Slalomimitator enthält: eine Basis, ein auf der Basis aufgestelltes Tragelement mit der Möglichkeit der Umsetzung nach links - nach rechts, eine auf diesem aufgestellte Plattform mit der Stützfläche für die Füße des Slalomläufers, die Schier bzw. ein Snowboard sowie mit der Möglichkeit der mit diesem gleichzeitigen Rotation periodisch im bzw. entgegen dem Uhrzeigersinn und eine Kurbelschleife für die Synchronisation und das Umsteuern von der erwähnten Umsetzung des Tragelements und Plattformrotation; diese Kurbelschleife wird **dadurch** kennlich gemacht, dass die Kulisse auf der Basis befestigt ist und mit der geschlossenen Laufbahn der Bewegung des Gleitsteines ausgeführt ist, der in der Kulisse so aufgestellt ist, dass die Möglichkeit seiner Bewegung in der Kulisse in eine Richtung und die Möglichkeit der Gewährleistung der Gesetzmäßigkeit von der Plattformumsetzung hinsichtlich der Basis gemäß dem Slalombewegungsgrundsatz einschließlich Translationsbewegung von den Füßen, von den Schiern bzw. von einem Snowboard nach links ― nach rechts sowie deren genannter gleichzeitiger Rotation und Bewegung nach vorne besteht.
